# EUROPEAN PATENT SPECIFICATION

(11) **EP 2 449 558 B1**
(45) Date of publication and mention of the grant of the patent: **27.04.2016**
(21) Application number: 10794576.8
(22) Date of filing: 25.06.2010
(51) Int. Cl.: G21C 17/00, G21C 17/108, G21D 3/00

(54) **INCORE INSTRUMENT CORE PERFORMANCE VERIFICATION METHOD**
VERFAHREN ZUR ÜBERPRÜFUNG DER LEISTUNG EINES KERNS MITTELS INSTRUMENTIERUNG DES KERNS
PROCEDE DE VERIFICATION DE PERFORMANCE DE COEUR PAR INSTRUMENTATION DANS LE COEUR

(30) Priority: 01.07.2009 US 495981
(43) Date of publication of application: 09.05.2012
(73) Proprietor: Westinghouse Electric Company LLC, Cranberry Township, Pennsylvania 16066 (US)
(72) Inventor: PRIBLE, Michael, C., Monroeville, PA 15146 (US); CONNER, Shannon, L., Pittsburgh, PA 15237 (US); HEIBEL, Michael, D., Harrison City, PA 15636 (US); SEBASTIANI, Patrick, J., Monroeville, PA 15146 (US); KISTLER, Daniel, P., Pittsburgh, PA 15239 (US)
(74) Representative: Gallo, Wolfgang
(86) International application number: PCT/US2010/039904
(87) International publication number: WO 2011/002670

(56) References cited:
- US-A- 3 932 211
- US-A- 4 077 836
- US-A- 5 215 707
- US-A- 5 229 066
- US-A- 5 745 538
- US-A1- 2003 128 793
- US-B1- 6 181 759
- US-B1- 6 310 929
- US-B2- 6 801 593
- "ANSI/ANS-19.6.1-2005;W2011 (W=Withdrawn): Reload Startup Physics Tests for Pressurized Water Reactors", 1 December 2005 (2005-12-01), ANSI/ANS STANDARD,, PAGE(S) 31PP, XP009175079, * sections 1, 2, 6.1.4, 6.6, 6.7, A.3.5.1; table 1 *
- "ZPPT Modifications for B&W Designed Reactors", , 1 August 2003 (2003-08-01), XP055092837, Retrieved from the Internet: URL:http://pbadupws.nrc.gov/docs/ML0322/ML 032260113.pdf [retrieved on 2013-12-11]

## Description

### BACKGROUND OF THE INVENTION

### 1. Field of the Invention

The present invention relates generally to the subcritical physics testing of a light water reactor and more particularly to the physics testing of a pressurized water reactor upon start-up.

### 2. Description of the Related Art

The primary side of nuclear reactor power generating systems which are cooled with water under pressure and are comprised of a closed circuit which is isolated and in heat exchange relationship with a secondary side for the production of useful energy. The primary side of the reactor vessel includes a core internal structure that supports a plurality of fuel assemblies containing fissile material, the primary circuit within heat exchange steam generators, the inner volume of a pressurizer, pumps and pipes for circulating pressurized water, and the pipes connecting each of the steam generators and pumps to the reactor vessel independently. Each of the parts of the primary side are comprised of a steam generator, a pump, and a system of pipes which are connected to the vessel form a loop of the primary side.

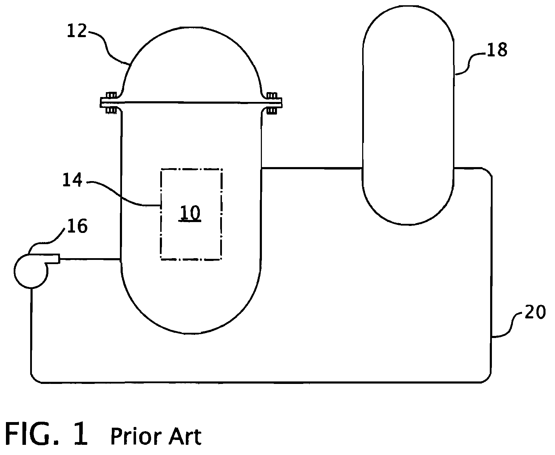

For the purpose of illustration, Figure 1 shows a simplified nuclear reactor primary system, including a generally cylindrical pressure vessel 10 having a closure head 12 enclosing a nuclear core 14. A liquid reactor coolant, such as water, is pumped into the vessel 10 by pump 16 through the core 14 where heat energy is absorbed and is discharged to a heat exchanger 18, typically referred to as a steam generator, in which heat is transferred to a utilization circuit (not shown), such as a steam driven turbine generator. The reactor coolant is returned to the pump 16 completing the primary loop. Typically, a plurality of the above-described loops are connected to a single reactor vessel 10 by reactor coolant piping 20.

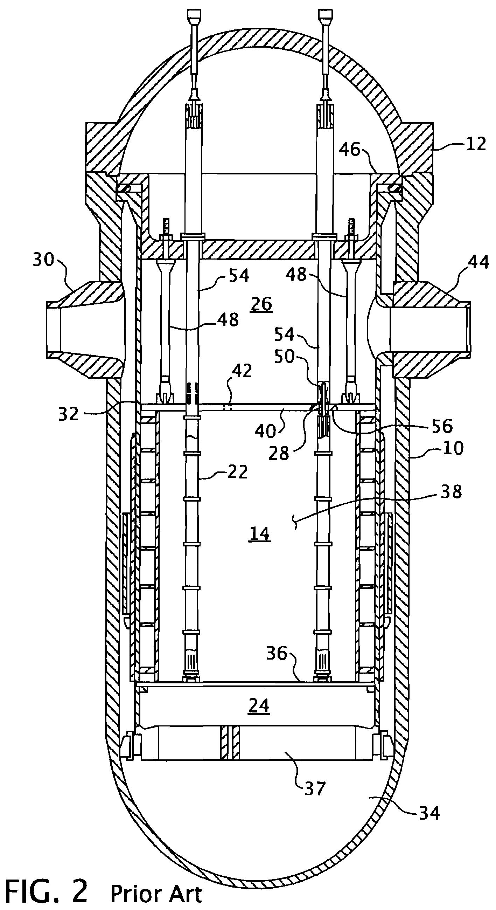

An exemplary reactor design is shown in more detail in Figure 2. In addition to the core 14 comprised of a plurality of parallel, vertical, co-extending fuel assemblies 22, for the purpose of this description, the other vessel internal structures can be divided into the lower internals 24 and the upper internals 26. In conventional designs the lower internals function to support, align and guide core components and instrumentation as well as direct flow within the vessel. The upper internals restrain or provide a secondary restraint for the fuel assemblies 22 (only two of which are shown for simplicity in this figure), and support and guide instrumentation and components, such as control rods 28. In the exemplary reactor shown in Figure 2, coolant enters the reactor vessel 10 through one or more inlet nozzles 30, flows down through an annulus between the vessel and the core barrel 32, is turned 180° in a lower plenum 34, passes upward through a lower support plate 37 and a lower core plate 36 upon which the fuel assemblies 22 are seated and through and about the assemblies. The fuel assemblies are restrained by the upper internals, including a circular upper core plate 40. Coolant exiting the core 14 flows along the underside of the upper core plate 40 and upward through a plurality of perforations 42. The coolant then flows upward and radially to one or more outlet nozzles 44.

The upper internals 26 can be supported from the vessel or the vessel head and include an upper support assembly 46. Loads are transmitted between the upper support assembly 46 and the upper core plate 40, primarily by a plurality of support columns 48. A support column is aligned above a selected fuel assembly 22 and perforations 42 in the upper core plate 40.

The rectilinearly movable control rods 28 typically include a drive shaft 50 and a spider assembly 52 of neutron poison rods that are guided through the upper internals 26 and into aligned fuel assemblies 22 by control rod guide tubes 54. The guide tubes are connected between the upper support assembly 46 and the upper core plate 40.

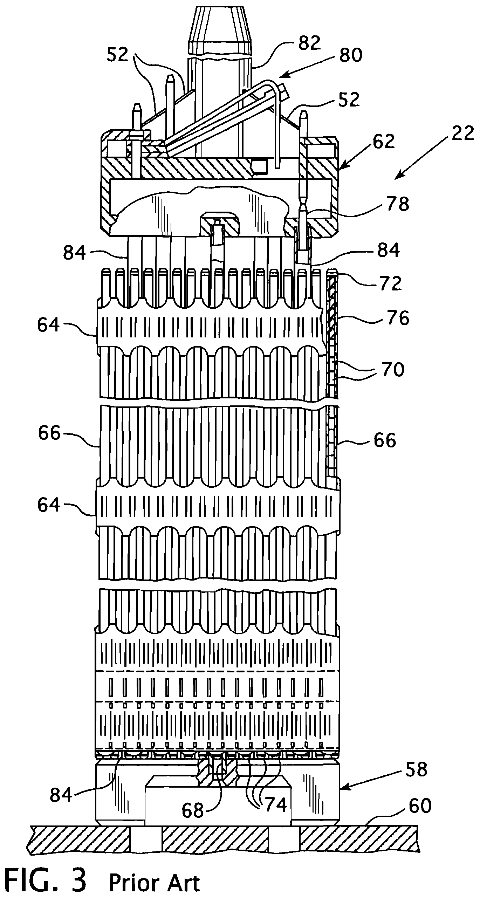

Figure 3 is an elevational view, represented in vertically shortened form, of a fuel assembly being generally designated by reference character 22. The fuel assembly 22 is the type used in a pressured water reactor and has a structural skeleton which, at its lower end, includes a bottom nozzle 58. The bottom nozzle 58 supports the fuel assembly 22 on a lower core support plate 60 in the core region of a nuclear reactor (the lower core support plate 60 shown in Figure 3 is represented by reference character 36 in Figure 2). In addition to the bottom nozzle 58, the structural skeleton of the fuel assembly 22 also includes a top nozzle 62 at its upper end and a number of guide tubes or thimbles 84, which extend longitudinally between the bottom and top nozzles 58 and 62 and at opposite ends are rigidly attached thereto.

The fuel assembly 22 further includes a plurality of transverse grids 64 axially spaced along and mounted to the guide thimbles 84 (also referred to as guide tubes) and an organized array of elongated fuel rods 66 transversely spaced and supported by the grids 64. Although it cannot be seen in Figure 3, the grids 64 are conventionally formed from orthogonal straps that are interleaved in an egg-crate pattern with the adjacent interface of four straps defining approximately square support cells through which the fuel rods 66 are supported in transversely spaced relationship with each other. In many conventional designs springs and dimples are stamped into the opposing walls of the straps that form the support cells. The springs and dimples extend radially into the support cells and capture the fuel rods there between; exerting pressure on the fuel rod cladding to hold the rods in position. Also, the assembly 22 has an instrumentation tube 68 located in the center thereof that extends between and is either mounted to or passes through the bottom and top nozzles 58 and 62. The former is illustrated in Figure 3.

Each fuel rod 66 includes a plurality of nuclear fuel pellets 70 and is closed at its opposite ends by upper and lower end plugs 72 and 74. The pellets 70 are maintained in a stack by a plenum spring 76 disposed between the upper end plug 72 and the top of the pellet stack. The fuel pellets 70, composed of fissile material, are responsible for creating the reactive power of the reactor. The cladding which surrounds the pellets functions as a barrier to prevent the fission by-products from entering the coolant and further contaminating the reactor system.

To control the fission process, a number of control rods 78 are reciprocably movable in the guide thimbles 84 located at predetermined positions in the fuel assembly 22. Specifically, a rod cluster control mechanism 80 positioned above the top nozzle 62 supports the control rods 78. The control mechanism has an internally threaded hub member 82 with a plurality of radially extending flukes or arms 52. Each arm 52 is interconnected to the control rods 78 such that the control mechanism 80 is operable to move the control rods vertically in the guide thimbles 84 to thereby control the fission process in the fuel assembly 22, under the motor power of control rod drive shafts 50 which are coupled to the control rod hubs 82, all in a well-known manner.

In such a pressurized water reactor power generating system, heat is generated within the core of the pressure vessel by a fission chain reaction occurring in the plurality of fuel rods supported within the core. As previously mentioned, the fuel rods are maintained in spaced relationship within the fuel assemblies and the space between the fuel rods forms coolant channels through which borated water flows. Hydrogen within the coolant water moderates the neutrons emitted from enriched uranium within the fuel to increase the number of nuclear reactions and thus increase the efficiency of the process. The control rod guide thimbles that are interspersed within the fuel assemblies in place of fuel rod locations serve to guide the control rods which are operable to be inserted or withdrawn from the core. When inserted, the control rods absorb neutrons and thus reduce the number of nuclear reactions and the amount of heat generated within the core.

The power level of a nuclear reactor is generally divided into three ranges: the source or start-up range, the intermediate range, and the power range. The power level of the reactor is continuously monitored to assure safe operation. Such monitoring is typically conducted by means of neutron detectors placed outside and inside the reactor core for measuring the neutron flux of the reactor. Since the neutron flux in the reactor at any point is proportional to the fission rate, the neutron flux is also proportional to the power level.

Fission and ion chambers have been used to measure flux in the source, intermediate and power range of a reactor. Typically fission and ionization chambers are capable of operating at all normal power levels, however, they are generally not sensitive enough to accurately detect low level neutron flux emitted in the source range. Thus, separate low level source range protectors are typically used to monitor neutron flux when the power level of the reactor is in the source range.

The fission reactions within the core occur when free neutrons at the proper energy levels strike the atoms of the fissionable material contained within the fuel rods. The reactions result in the release of a large amount of heat energy which is extracted from the core in the reactor coolant and in the release of additional free neutrons which are available to produce more fission reactions. Some of these released neutrons escape the core or are absorbed by neutron absorbers, e.g., control rods, and therefore do not cause traditional fission reactions. By controlling the amount of neutron absorbent material present in the core, the rate of fission can be controlled. There are always random fission reactions occurring in the fissionable material, but when the core is shut down, the released neutrons are absorbed at such a high rate that a sustained series of reactions do not occur. By reducing the neutron absorbent material until the number of neutrons in a given generation equals the number of neutrons in the previous generation, the process becomes a self-sustaining chain reaction and the reactor is said to be "critical". When the reactor is critical, the neutron flux is six or so orders of magnitude higher than when the reactor is shut down. In some reactors, in order to accelerate the increase in neutron flux in a shut down core to achieve practical transition intervals, an artificial neutron source is implanted in the reactor core among the fuel rods containing the fissionable material. This artificial neutron source creates a localized increase in the neutron flux to aid in bringing the reactor up to power.

In the absence of a neutron source, the ratio of the number of free neutrons in one generation to those in the previous generation is referred to as the "neutron multiplification factor" (K_{eff}) and is used as a measure of the reactivity of the reactor. In other words, the measure of criticality for a nuclear core is K_{eff}, that is, the ratio of neutron production to total neutron loss attributable to both destruction and loss. When K_{eff} is greater than one, more neutrons are being produced than are being destroyed. Similarly, when K_{eff} is less than one, more neutrons are being destroyed than are being produced. When K_{eff} is less than one, the reactor is referred to as being "subcritical".

The standard published by the American National Standards Institute (ANSI) and the American Nuclear Society (ANS), ANSI/ANS 19.6.1, "Reload Start-up Physics Test For Pressurized Water Reactors," requires that certain core parameters be confirmed prior to the reactor going critical. The purpose of confirming these parameters during physics testing is to perform core design verification, *i.e.,* to prove that the constructed core behaves sufficiently close to how the designed core is expected to behave. By providing that verification, the safety analyses performed on the core for that fuel cycle are validated. The characteristics that have to be confirmed during Hot Zero Power (less than 5% Rated Thermal Power) are:
· Power distribution,
· Reactivity control,
· Reactivity balance,
· Capability to shut down (shutdown margin)
These characteristics are currently quantitatively "measured" by determining the All Rods Out Hot Zero Power critical boron concentration (also referred to as the boron end point), moderator temperature coefficient, isothermal temperature coefficient and total control rod bank worth.

The foundation on which physics testing stands is observing an expected response from the core. Several current physics testing programs such as the Dynamic Rod Worth Measurement program or the Subcritical Rod Worth Measurement program are capable of accurately confirming all of the previously listed parameters. The Dynamic Rod Worth Measurement program uses one of a nuclear plant's four excore power range detectors (which is required to be taken out of service) to perform the testing while the reactor is in the zero power test range. To perform the measurement, groups of control rods are individually inserted and removed from the core in a continuous motion at the maximum rod stepping speed. After each group is removed from the core, it is necessary to allow the flux to recover to the initial starting level. During the time required for flux recovery, data processing is performed to obtain the total rod worth and the integral rod worth as a function of group position. A special technical specification exception is entered during Low Power Physics Testing to allow for the control rods moving out of sequence and below their insertion limit and also for a moderator temperature coefficient that is more negative than employed during normal operations. The Dynamic Rod Worth Measurement program is able to determine the first "rough" look at power distribution based on individual control rod bank worths. If all of the review criteria are met on individual bank worths measured with the Dynamic Rod Worth Measurement program, then no low power flux map is needed to further confirm the core. However, if an individual bank worth differs by more than 15% or 100 pcm from that which was predicted, then a low power flux map is required for investigation into the anomaly. This method typically takes between 8 and 12 hours of outage critical path time at a four loop plant.

The Subcritical Rod Worth Measurement program uses both of a nuclear plant's source range detectors, without requiring them to be taken out of service. Testing is performed while the reactor is subcritical (K_{eff} ≤ 0.99) and requires less complicated control rod maneuvers than the Dynamic Rod Worth Measurement program, which makes the testing easier and more familiar to the reactor operator. The control rods are withdrawn in the manner typical in preparing for Hot Rod Drop timing measurement testing. The Subcritical Rod Worth Measurement program specifies state points at which the source range detector count rate data is collected. Rod withdrawal is briefly stopped at each state point to collect the necessary data and the process continues until reaching an all rods out condition. The Subcritical Rod Worth Measurement program then calculates the total control rod worth and the critical boron concentration from the source range data collected at each state point. Following the results evaluation of the total control rod worth and critical boron concentration measurements, an isothermal temperature coefficient measurement is performed by changing system temperature by approximately 6°F (3.3°C) and determining the corresponding change in reactivity. This determination is made using the relationship between the change in reactivity and the change in ex-core detector indication measured during the rod withdrawals.

The subcritical Rod Worth Measurement verification method uses the SubCritical Inverse Count Rate methodology that is more fully described in U.S. Patent Application Serial No. 12/332,577, filed December 11, 2008, to predict the subcritical core neutron distribution which enables the linearization of the highly non-linear Inverse Count Rate Ratio so that K_{eff} changes can be determined from spatially corrected source range detector signal measurements. The voltage from the source range detectors that was monitored at each state point is converted to counts and K_{eff} at each state point. The total change in reactivity during the rod pulls determines the total bank worth. The Spatially Corrected Inverse Count Rate Ratio is then extrapolated to zero to determine the necessary reactivity to go critical (or the boron end point). This extrapolated point provides an accurate measurement of an expected critical condition which enables the plant to pull rods to take the plant critical, rather than having to dilute the boron concentration in the coolant to reach critically without a known expected critical condition based on that particular fuel cycle's core experience. The agreement between the actual and predicted core power distribution relies on the measurement of the mean Inverse Count Rate Ratio deviations from the predicted value (MD) divided by the measured Root Mean Square differences of the measured Inverse Count Rate Ratio from the predicted values (RMS) over the withdrawal of all of the control and shut-down banks, or MD/RMS. While this method has proven accurate during its many applications, a flux map at 30% rated thermal power is still required to further verify core power distribution. This method typically requires between 3 and 5 hours of outage critical path time at a four loop plant. Further prior art information on this subject matter is found in a Framatome paper "ZPPT Modifications for B&W Designed Reactors", BAW-10242 (NP), Aug. 2003, and in patent documents US 2003/128793 A1, US 5,229,066 A, US 6,310,929 B1.

Accordingly, a new subcritical physics testing program is desired that will save outage critical path time. Furthermore, an improved subcritical physics testing program is desired that will completely remove the required subcritical physics testing form the outage critical path. Additionally, an improved physics testing program is desired that will confirm that the core will operate as designed above criticality.

### SUMMARY OF THE INVENTION

This invention achieves the foregoing objectives by providing a subcritical physics testing method, as defined in claim 1, that employs measurements taken from incore instrumentation housed within instrument thimbles within the fuel assemblies of the core. The incore instrumentation positioned at a number of radial locations within the core monitors the neutron flux in the core over a plurality of axial zones, substantially along an active length of the fissile fuel elements. The method first analytically predicts a power distribution for the core. Then while the core is initially in a shutdown subcritical condition with K_{eff} ≤ 0.99 by insertion of at least some of the control rods and/or the addition of a chemical neutron absorber into the core, the method withdraws the control rods from the core in a pre-established sequence to raise the power level of the core within a subcritical power range. While the control rods are being withdrawn, the method monitors the power level at the axial and radial core locations monitored by the incore instrumentation to obtain a monitored power distribution from one or more outputs of the incore instrumentation. The method then compares the analytically predicted power distribution to the monitored power distribution. If the monitored and predicted power distributions are within a preselected deviation, the method continues normal reactor startup to bring the reactor up to power without interruption, so long as the monitored power remains within specifications.

Desirably, the monitoring step provides an integrated fuel assembly neutron flux distribution measurement at various reactor temperatures and control rod position configurations as the control rods are withdrawn. In one embodiment, the integrated fuel assembly neutron flux distribution measurement is obtained by integrating the output of the incore instrumentation until a fractional uncertainty in the relative output meets a specified uncertainty level. The method then compares the monitored power distribution against a corresponding predicted signal distribution that was part of the analytically predicted power distribution to identify if there are any significant deviations between the monitored and predicted power distributions. In the latter embodiment, the method preferably includes the step of using the monitored axial and radial power levels obtained at different temperatures and rod positions to quantify reactivity changes that occur between the different temperatures and rod positions so that a temperature coefficient of reactivity and a reactivity worth of the control rods can be determined and compared to predicted values. In still another embodiment wherein the monitored and predicted power distribution are within the preselected deviation through the subcritical power range, the method includes the step of continuing to compare the analytically predicted power distribution to the monitored power distribution as the reactor goes critical up until a predetermined power range.

### BRIEF DESCRIPTION OF THE DRAWINGS

A further understanding of the invention can be gained from the following description of the preferred embodiments when read in conjunction with accompanying drawings in which:
Figure 1 is a schematic representation of the primary side of a nuclear power generating system;
Figure 2 is an elevational view, partially in section, of a nuclear reactor vessel and internal components to which this invention can be applied;
Figure 3 is an elevational view, partially in section, of a fuel assembly illustrated in vertically shortened form, with parts broken away for clarity; and
Figure 4 is a schematic view of the vanadium detector element layout of the incore flux detectors employed by the invention.

### DESCRIPTION OF THE PREFERRED EMBODIMENT

The incore instrument subcritical verification program of this invention in many respects is similar to the Subcritical Rod Worth Measurement program. The main difference is that this invention employs Optimized Proportional Axial Region Signal Separation Extended Life (OPARSSEL™) incore instrumentation thimble assemblies that are more fully described in U.S. Patent 5,745,538. The use of vanadium fixed incore detectors instead of the excore source range detectors enable the subcritical and low power physics testing to be carried out and completed during and without interruption of the start-up procedure, which removes the core design verification activities from the outage critical path. The OPARSSEL incore instrumentation thimble assemblies replace the movable incore detector systems employed in many pressurized water reactors.

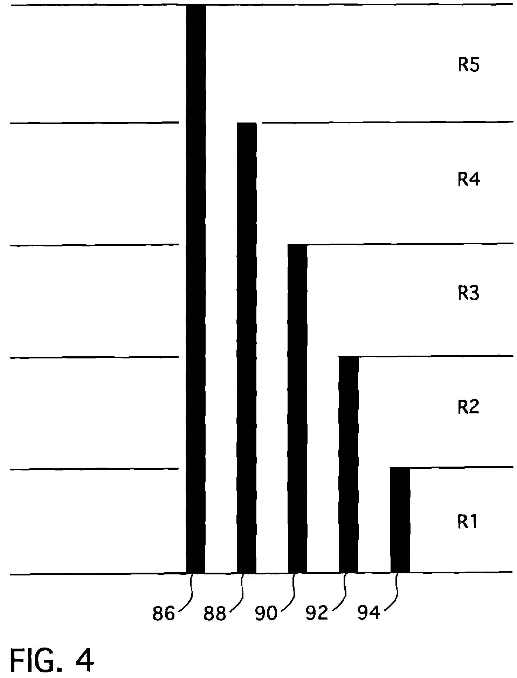

Figure 4 represents a schematic of the detector element configuration inside the incore flux detector instrumentation thimble assemblies. A vanadium incore detector element in a neutron flux produces a signal caused by the absorption of a neutron by the vanadium-51 isotope to produce vanadium-52. The vanadium-52 isotope decays by beta emission, which produces an electrical current proportional to the neutron flux. Each incore instrumentation thimble assembly houses multiple variable length self-powered detector elements to provide an axial core power distribution. Typically five detector elements are provided as illustrated in Figure 4, but newer reactors, such as AP1000, employ as many as seven detector elements. The longest detector emitter 86 spans the entire active fuel element length, extending over regions R1-R5 and provides an integrated measurement of the total neutron flux contained within the associated fuel assembly. The shorter detector elements 88, 90, 92 and 94 provide signals that can be used to determine the relative fraction of the total neutron flux being generated at the different axial regions R1-R5 of the fuel assembly defined by the overlap with the longest detector element 86. This information allows measurement of the relative radial and axial power shape in all of the core locations containing incore instrumentation thimble assemblies. This measured information can then be compared to the corresponding predicted relative axial and radial power distribution information to identify whether there are any significant differences from the expected conditions. The total signal measured from all of the detector elements can also be used to establish whether there is a global reactivity bias between the as built and predicted core.

The incore instrumentation subcritical verification program of this invention thus uses the self-powered detectors in the incore instrumentation thimble assemblies to provide an integrated fuel assembly neutron flux distribution measurement at various temperatures and rod position configurations similar to the manner in which the Subcritical Rod Worth Measurement program processes the source range detector signals. However, in the case of the incore instrumentation thimble assembly signals, the measurement information is obtained by integrating the current signal's output from each detector emitter until the fractional uncertainty in the relative detector signals meets a specified uncertainty level. The measured detector signal distribution is then compared against a corresponding predicted signal distribution to identify if there are any significant deviations between the measured and predicted radial and axial power distribution. Measurements obtained at different temperatures and rod positions may also be used to quantify the reactivity changes that occur between these condition changes so that the temperature coefficient of reactivity and the reactivity worth of the control rods can be measured and compared to the expected values. Employing the method of this invention control rod withdrawal is carried out in a pre-established sequence and desirably is continuous without the need for state points for the collection of data.

An additional advantage of the incore instrument subcritical verification program of this invention is that the comparison between actual and predicted power distributions and other core parameters can continue at power levels above the point where the reactor goes critical to further validate the safety analyses that were performed for the core. Thus, the use of the core design verification methodology of this invention significantly enhances the accuracy, safety and convenience of the core design verification process and essentially removes all core design verification activities from the outage critical path.

While specific embodiments of the invention have been described in detail, it will be appreciated by those skilled in the art that various modifications and alternatives to those details could be developed in light of the overall teachings of the disclosure. Accordingly, the particular embodiments disclosed are meant to be illustrative only and not limiting as to the scope of the invention, which is defined in appended claims.

## Claims

1. A subcritical physics testing method for confirming that a core (14) of a nuclear reactor will operate as designed, wherein the core (14) has a radial and axial dimension and a plurality of fuel assemblies (22) comprising a number of fissile fuel elements, with at least some of the fuel assemblies (22) having guide thimbles (84) for the insertion of control rods (28) that are moveable into and out of the core in banks, and at least one instrument thimble (68) in which an incore instrumentation is housed for monitoring the neutron flux in the core (14) at a radial location about the incore instrumentation, and over a plurality of axial zones substantially along an active length of the fissile fuel elements (66), the method comprising:
analytically predicting a power distribution in the core (14);
initially maintaining the core (14) in a shutdown subcritical condition with K_{eff} less than one by the insertion of at least some of the control rods (28) into the core (14) and/or an addition of a chemical neutron absorber into the core (14);
withdrawing the control rods (28) from the core (14) in a pre-established sequence to raise the power level of the core (14) within a subcritical power range wherein the withdrawing step continuously withdraws the control rods (28) from the core (14);
monitoring a power level at the axial and radial core locations monitored by the incore instrumentation using vanadium fixed incore detectors (86, 88, 90, 92, 94) to obtain a monitored power distribution from one or more outputs of the incore instrumentation while the power level is being raised within the subcritical power range; and
comparing the analytically predicted power distribution to the monitored power distribution and, if the monitored and predicted power distributions are within a preselected deviation, continue normal reactor startup to bring the reactor up to power without interruption, so long as the monitored power remains within specifications.

2. The subcritical physics testing method of claim 1, wherein the monitoring step provides an integrated fuel assembly neutron flux distribution measurement at various reactor temperatures and control rod position configurations as the control rods (28) are withdrawn.

3. The subcritical physics testing method of claim 2, wherein the integrated fuel assembly neutron flux distribution measurement is obtained by integrating the output of the incore instrumentation until a uncertainty in the relative output meets a specified uncertainty level, and then comparing the monitored power distribution against a corresponding predicted signal distribution that was part of the analytically predicted power distribution to identify if there are any significant deviations between the monitored and predicted power distributions.

4. The subcritical physics testing method of claim 3, including the step of using the monitored axial and radial power levels obtained at different temperatures and rod positions to quantify reactivity changes that occur between the different temperatures and rod positions so that a temperature coefficient of reactivity can be determined and compared to predicted values.

5. The subcritical physics testing method of claim 3, including the step of using the monitored axial and radial power levels obtained at different temperatures and rod positions to quantify reactivity changes that occur between the different temperatures and rod positions so that a reactivity worth of the control rods (28) can be determined and compared to predicted values.

6. The subcritical physics testing method of claim 3, including the step of using the monitored axial and radial power levels obtained at different temperatures and rod positions to quantify reactivity changes that occur between the different temperatures and rod positions so that an all-rods-out critical boron concentration measurement can be determined and compared to predicted values.

7. The physics testing method of claim 1, wherein the monitored and predicted power distribution are within the preselected deviation through the subcritical power range including the step of continuing to compare the analytically predicted power distribution to the monitored power distribution as the reactor goes critical up until a predetermined power range.

## Patentansprüche

1. Unterkritisches physikalisches Prüfverfahren zur Bestätigung, dass ein Kern (14) eines Kernreaktors konstruktionsgemäß arbeitet, wobei der Kern (14) eine radiale und axiale Dimension sowie eine Vielzahl von Brennstoffanordnungen (22) mit einer Reihe von spaltbaren Brennstoffelementen aufweist, wobei zumindest einige der Brennstoffanordnungen (22) Führungs-Fingerhutrohre (84) zum Einführen von Steuerstäben (28) aufweisen, die in Gruppen in und aus dem Kern beweglich sind, und zumindest einem Instrumentierungs-Fingerhutrohr (68), in dem eine Innenkern-Instrumentierung untergebracht ist, um den Neutronenfluss in dem Kern (14) an einer radialen Position um die Innenkern-Instrumentierung und über eine Vielzahl von axialen Zonen im Wesentlichen entlang einer aktiven Länge der spaltbaren Brennstoffelemente (66) zu überwachen, wobei das Verfahren folgende Schritte umfasst:
analytisches Prognostizieren einer Leistungsverteilung in dem Kern (14);
anfängliches Halten des Kerns (14) in einem unterkritischen Abschaltzustand mit K_{eff} unter eins, durch die Einführung zumindest einiger der Steuerstäbe (28) in den Kern (14) und/oder durch Zugabe eines chemischen Neutronenabsorbers in den Kern (14);
Ausfahren der Steuerstäbe (28) aus dem Kern (14) in einer zuvor festgelegten Abfolge, um das Leistungsniveau (14) des Kerns innerhalb eines unterkritischen Leistungsbereichs anzuheben, wobei der Schritt des Ausfahrens die Steuerstäbe (28) kontinuierlich aus dem Kern (14) ausfährt;
Überwachen eines Leistungsniveaus an den axialen und radialen Kernpositionen, die durch die Innenkern-Instrumentierung unter Verwendung von festen Vanadium-Innenkern-Detektoren (86, 88, 90,92, 94) überwacht werden, um eine überwachte Leistungsverteilung von einem oder mehreren Ausgängen der Innenkern-Instrumentierung zu erhalten, während das Leistungsniveau innerhalb des unterkritischen Leistungsbereichs angehoben wird; und
Vergleichen der analytisch prognostizierten Leistungsverteilung mit der überwachten Leistungsverteilung und, wenn die überwachte und die prognostizierte Leistungsverteilung innerhalb einer vorgewählten Abweichung liegen, Fortsetzen des normalen Reaktorhochfahrvorgangs, um den Reaktor ohne Unterbrechung auf Leistung zu bringen, so lange die überwachte Leistung innerhalb der Vorgaben bleibt.

2. Unterkritisches physikalisches Prüfverfahren nach Anspruch 1, wobei der Überwachungsschritt eine integrierte Brennstoffanordnungs-Neutronenflussverteilungsmessung bei verschiedenen Reaktortemperaturen und Steuerstabstellungskonfigurationen bereitstellt, während die Steuerstäbe (28) ausgefahren werden.

3. Unterkritisches physikalisches Prüfverfahren nach Anspruch 2, wobei die integrierte Brennstoffanordnungs-Neutronenflussverteilungsmessung erhalten wird, indem der Ausgang der Innenkern-Instrumentierung integriert wird, bis eine Unsicherheit in dem relativen Ausgang ein angegebenes Unsicherheitsniveau erfüllt, und dann die überwachte Leistungsverteilung mit einer entsprechenden vorhergesagten Signalverteilung verglichen wird, die Teil der analytisch prognostizierten Leistungsverteilung war, um zu identifizieren, ob beträchtliche Abweichungen zwischen den überwachten und vorhergesagten Leistungsverteilungen bestehen.

4. Unterkritisches physikalisches Prüfverfahren nach Anspruch 3, umfassend den Schritt der Verwendung der überwachten axialen und radialen Leistungsniveaus, die bei unterschiedlichen Temperaturen und Stabstellungen erhalten wurden, um Reaktivitätsveränderungen zu quantifizieren, die zwischen den unterschiedlichen Temperaturen und Stabstellungen auftreten, so dass ein Reaktivitäts-Temperaturkoeffizient bestimmt und mit prognostizierten Werten verglichen werden kann.

5. Unterkritisches physikalisches Prüfverfahren nach Anspruch 3, umfassend den Schritt der Verwendung der überwachten axialen und radialen Leistungsniveaus, die bei unterschiedlichen Temperaturen und Stabstellungen erhalten wurden, um Reaktivitätsveränderungen zu quantifizieren, die zwischen den unterschiedlichen Temperaturen und Stabstellungen auftreten, so dass ein Reaktivitätswert der Steuerstäbe (28) bestimmt und mit prognostizierten Werten verglichen werden kann.

6. Unterkritisches physikalisches Prüfverfahren nach Anspruch 3, umfassend den Schritt der Verwendung der überwachten axialen und radialen Leistungsniveaus, die bei unterschiedlichen Temperaturen und Stabstellungen erhalten wurden, um Reaktivitätsveränderungen zu quantifizieren, die zwischen den unterschiedlichen Temperaturen und Stabstellungen auftreten, so dass eine kritische Borkonzentration bei vollständig ausgefahrenen Steuerstäben bestimmt und mit prognostizierten Werten verglichen werden kann.

7. Physikalisches Prüfverfahren nach Anspruch 1, wobei innerhalb des unterkritischen Leistungsbereichs die überwachte und die prognostizierte Leistungsverteilung innerhalb der vorgewählten Abweichung liegen, umfassend den Schritt des kontinuierlichen Vergleichens der analytisch prognostizierten Leistungsverteilung mit der überwachten Leistungsverteilung, während der Reaktor kritisch bis zu einem vorbestimmten Leistungsbereich hochfährt.

## Revendications

1. Procédé d'essai physique sous-critique pour confirmer qu'un coeur (14) d'un réacteur nucléaire fonctionne comme prévu, dans lequel le coeur (14) a une dimension radiale et axiale et une pluralité d'assemblages combustibles (22) comprenant un nombre d'éléments combustibles fissiles, au moins certains des assemblages combustibles (22) ayant des chaussettes de guidages (84) pour l'introduction des barres de contrôle (28) qui peuvent être introduites dans le coeur et retirées de ceci en groupes, et au moins une chaussette d'instrumentation (68) dans laquelle une instrumentation en coeur est logée pour surveiller le flux neutronique dans le coeur (14) dans une position radial autour de l'instrumentation en coeur, et à travers une pluralité des zones axiales sensiblement le long d'une longueur active des éléments combustibles fissiles (66), le procédé comprenant les étapes suivantes :
prédire une distribution de puissance dans le coeur (14) ;
maintenir le coeur (14) initialement dans un état sous-critique d'arrêt avec K_{eff} inférieure à une, par l'insertion d'au moins une partie des barres de contrôle (28) dans le coeur (14) et / ou par l'addition d'un absorbeur de neutrons chimique dans le coeur (14) ;
retirer les barres de contrôle (28) du coeur (14) dans une séquence préétablie pour élever le niveau de puissance du coeur (14) dans une gamme de puissance sous-critique, dans lequel les barres de contrôle (28) sont retirées du coeur (14) en continue dans l'étape de retrait ;
surveiller un niveau de puissance dans les positions axiales et radiales du coeur qui sont surveillées par l'instrumentation en coeur en utilisant des détecteurs en coeur fixes (86, 88, 90,92, 94) en vanadium, pour obtenir une distribution de puissance surveillée à partir d'une ou plusieurs sorties de l'instrumentation en coeur, lorsque le niveau de puissance est élevé dans la gamme de puissance sous-critique ; et
comparer la distribution de puissance prédite de manière analytique à la distribution de puissance surveillée, et, si les distributions de puissance surveillées et prédites sont dans une déviation présélectionnée, continuer le démarrage normal du réacteur pour amener le réacteur à puissance sans interruption, tant que la puissance surveillée reste conforme aux spécifications.

2. Procédé d'essai physique sous-critique selon la revendication 1, dans lequel l'étape de surveillance fournit une mesure intégrée de la distribution du flux neutronique d'assemblage combustible pour des températures diverses du réacteur et des configurations diverses de positions de barre de contrôle, lorsque les barres de contrôle (28) sont retirées.

3. Procédé d'essai physique sous-critique selon la revendication 2, dans lequel la mesure intégrée de la distribution du flux neutronique d'assemblage combustible est obtenue par intégration de la sortie de l'instrumentation en coeur jusqu'à ce qu'une incertitude dans la sortie relative conforme à un niveau d'incertitude spécifié, et puis par comparaison de la distribution de puissance surveillée à une distribution de signal prédite correspondante qui faisait partie de la distribution de puissance analytiquement prédite, pour identifier s'il y a des déviations importantes entre les distributions de puissance surveillées et prédites.

4. Procédé d'essai physique sous-critique selon la revendication 3, comprenant l'étape de l'utilisation des niveaux de puissance axiaux et radiaux surveillés qui sont obtenus à des températures différentes et des positions des barres différentes, pour quantifier des changements de réactivité qui ont lieu entre des températures et positions de barre différentes, de telle manière qu'un coefficient de réactivité de température peut être déterminé et comparé à des valeurs prédites.

5. Procédé d'essai physique sous-critique selon la revendication 3, comprenant l'étape de l'utilisation des niveaux de puissance axiaux et radiaux surveillés qui sont obtenus à des températures différentes et des positions des barres différentes, pour quantifier des changements de réactivité qui ont lieu entre des températures et positions de barre différentes, de telle manière qu'une valeur de réactivité des barres de contrôle (28) peut être déterminée et comparée à des valeurs prédites.

6. Procédé d'essai physique sous-critique selon la revendication 3, comprenant l'étape de l'utilisation des niveaux de puissance axiaux et radiaux surveillés qui sont obtenus à des températures différentes et des positions des barres différentes, pour quantifier des changements de réactivité qui ont lieu entre des températures et positions de barre différentes, de telle manière qu'une concentration critique de bore, pour l'état où les barres de contrôle sont complètement retirées, peut être déterminée et comparée à des valeurs prédites.

7. Procédé d'essai physique selon la revendication 1, dans lequel les distributions de puissance surveillées et prédites sont dans la déviation présélectionnée dans la gamme de puissance sous-critique, comprenant l'étape de comparaison continue de la distribution de puissance prédite de manière analytique à la distribution de puissance surveillée, lorsque la puissance du réacteur est poussée de manière critique jusqu'à une gamme de puissance prédéterminée.
